# EUROPÄISCHE PATENTSCHRIFT

(11) **EP 0 946 809 B1**
(45) Veröffentlichungstag und Bekanntmachung des Hinweises auf die Patenterteilung: **17.10.2001**
(21) Anmeldenummer: 97954717.1
(22) Anmeldetag: 22.12.1997
(51) Int. Cl.: D06M 11/45, B27K 3/26, D21H 27/00

(54) **NICHT BRENNBARES FASERPRODUKT**
NON-INFLAMMABLE FIBER PRODUCT
PRODUIT FIBREUX NON INFLAMMABLE

(30) Priorität: 23.12.1996 DE 19654836; 23.12.1996 DE 29622593 U
(43) Veröffentlichungstag der Anmeldung: 06.10.1999
(73) Patentinhaber: Protekum Umweltinstitut GmbH Oranienburg, 16515 Oranienburg (DE)
(72) Erfinder: WIHSMANN, Marc, D-12524 Berlin (DE); EBNER, Lothar, D-16515 Oranienburg (DE)
(74) Vertreter: Walter, Wolf-Jürgen
(86) Internationale Anmeldenummer: DE9703031
(87) Internationale Veröffentlichungsnummer: WO9828562

(56) Entgegenhaltungen:
- EP-A- 0 322 287
- CA-A- 2 150 600
- DE-A- 3 316 197
- US-A- 4 184 969
- US-A- 4 702 861

## Beschreibung

Die Erfindung betrifft ein nicht brennbares Faserprodukt, das als flammwidriges Material oder als Dämmaterial oder als ein für beide Zwecke geeignetes Material eingesetzt werden kann.

Es sind bereits zahlreiche Wärmedämmstoffe auf Cellulosebasis zum Einblasen in Hohlräume von Wänden, Dächern und Decken bekannt, die eine, wie auch immer geartete, Dämmschicht mit guten Wärmeisolationseigenschaften bilden. Diese Materialien bestehen im wesentlichen aus Papier- bzw. Altpapierprodukten (ca. 85 %), und sind mit Borax, Borsäure und Aluminiumhydroxid als Zuschlagstoffe zur Brandsicherheit und gegen Pilz- und sonstigen Schädlingsbefall versetzt. Die Wärmeleitfähigkeit liegt z.T. in der Größenordnung um 0,045 W/mK.

Andere Materialien in Form von Platten oder Lagen mit ähnlichen Wärmeleitfähigkeiten und auf Basis von Altpapier aus Tageszeitungen sind ebenfalls bekannt und handelsüblich.

Aus CA-A-2150600 ist ein flammfestes Material aus organischen oder anorganischen Fasern mit einem Gehalt an Na-/K-silicaten, oberflächenaktiven Mitteln und wärmeexpandierenden Mikrokügelchen bekannt. US-A-4184969 beschreibt eine anorganische Zusammensetzung als Additiv zu Zellulosefasern, bestehend aus Aluminiumoxid-trihydrat, Ammoniumsulfat, Borax und Borsäure.

Weiterhin ist aus der CH 683 543 ein Dämmaterial aus Schafschurwolle bekannt, das sowohl schall- als wärmedämmend ist.

Bei diesen bekannten Produkten werden allerdings wertvolle Ressourcen, in diesen Fällen Altpapier bzw. Wolle, die in der Papier- bzw. der Textilherstellung durchaus wieder verwendbar wären und für die eine starke Nachfrage besteht, der qualitativ höchsten Verwertung entzogen.

Außerdem werden Borsäure bzw. deren Salze in beträchtlichen Größenordnungen (bis 15 % Gewichtsanteil) zur bioziden Ausrüstung eingesetzt, obwohl diese Verbindungen nicht als ökologisch unbedenklich eingestuft werden.

Weiterhin sind als Stoffe zur Flammfestausrüstung Phosphate wie Ammoniumphosphat, oder Zinkborat, Aluminiumoxidhydrat, halogenierte organische Verbindungen und insbesondere halogenierte organische Phosphorverbindungen eingesetzt worden, und zur Verminderung des Nachglimmens sind zusätzlich sauerstoff-absperrende Überzüge aufgetragen worden (RÖMPP, 9. Auf., S. 1369-1370).

Der Erfindung liegt die Aufgabe zugrunde, ein nicht brennbares und Bor-freies Produkt zu entwickeln, das vorzugsweise auch wärmedämmend wirkt und dabei möglichst preisgünstige Altstoffe oder nicht mehr in die Produktion rückführbare Stoffen eingesetzt werden. Eine spezielle Aufgabe besteht darin, cellulosehaltige Abfallprodukte, die bisher z.B. verbrannt wurden, einer sinnvollen Verwendung innerhalb des Kreislaufs verarbeitbarer Cellulose zuzuführen.

Erfindungsgemäß gelingt dies durch ein nicht brennbares Faserprodukt, das einen Gehalt hat an
25 bis 97 Gew.-% einer cellulosehaltigen Faser oder eines cellulosehaltigen Fasergemisches;
0,01 bis 1 Gew.-% eines nichtionischen Tensides;
1 bis 5 Gew.-% auf und in der Faser fein verteilten Aluminiumoxids; und
0 bis 68 Gew-% Füllstoffe, jeweils bezogen auf das Gesamtgewicht.

Es ist vorteilhaft, wenn das Faserprodukt weiterhin 0,005 bis 0,5 Gew-% eines biologisch wirksamen, grenzflächenaktiven Wirkstoffes enthält. Der biologisch wirksame, grenzflächenaktive Wirkstoff kann ein kationisches Tensid oder ein in Wasser schwer lösliches kationisches Tensid oder ein Gemisch davon sein.

Als nichtionische Tenside (Niotenside) können vorzugsweise eingesetzt werden Fettalkoholethoxylate, Alkylphenyl-ethoxylate, Fettaminethoxylate, Fettsäureesterethoxylate, Alkanolamide, Zuckertenside oder Aminoxide. Besonders bevorzugt sind Fettalkoholethoxylate, wie z.B. solche von C₁₆/C₁₈-Alkoholen mit 16-20 Ethoxy-Einheiten.

Bei Niotensidgehalten unter 0,05 Gew-% tritt keine ausreichende Flammwidrigkeit (Schwerentflammbarkeit) auf, und bei Gehalten über 1 Gew-% wird keine verbesserte Leistung mehr erreicht, und der Einsatz ist unwirtschaftlich.

Die cellulosehaltige Faser oder das Fasergemisch wird ausgewählt unter reiner aufbereiteter Cellulose, ligninhaltigen Holzstrukturen wie Kompaktholz, Späne oder Holzschliff, sowie unter Rinde, Borke, Stroh, Flachs, Hanf, Jute, Kokos, Baumwolle, Altpapier, sonstigen cellulosehaltigen Abfallprodukten und Gemischen davon. Zu den sonstigen cellusosehaltigen Abfallprodukten gehören auch solche, die bei der Papier- oder Zellstoffherstellung wegen zu geringen Celulosegehaltes oder aus anderen Gründen normalerweise nicht weiterverarbeitet werden können.

Eine bevorzugte Ausführungsform der Erfindung weist einen Cellulosegehalt von 50 bis 97 Gew-% auf, besonders bevorzugt 70 bis 97 Gew-%.

Ein weiterer Gegenstand der Erfindung ist ein nicht brennbares Faserprodukt, gekennzeichnet durch einen Gehalt an 25 bis 97 Gew.-% einer cellulosehaltigen Faser oder eines cellulosehaltigen Fasergemisches;
0,01 bis 1 Gew.-% eines nichtionischen Tensides;
1 bis 5 Gew.-% auf und in der Faser fein verteilten Aluminiumoxids; und 0 bis 68 Gew-% Füllstoffe,
hergestellt durch Vermischen einer wäßrigen 1 bis 15 Gew-%igen Lösung von Aluminiumhydroxidchlorid, die 0,05 bis 1 Gew-% eines nichtionischen Tensides enthält, mit 25 bis 97 Gew-% einer cellulosehaltigen Faser oder eines cellulosehaltigen Fasergemisches sowie 0 bis 68 Gew-% eines Füllstoffes oder Füllstoffgemisches und anschließender Trocknung.

Ein weiterer Gegenstand der Erfindung ist ein Verfahren zur Herstellung eines nicht brennbaren Faserproduktes durch durch Vermischen einer wäßrigen 1 bis 15 Gew-%igen Lösung von Aluminiumhydroxidchlorid, die 0,05 bis 1 Gew-% eines nichtionischen Tensides enthält, mit 25 bis 97 Gew-% einer cellulosehaltigen Faser oder eines cellulosehaltigen Fasergemisches sowie 0 bis 68 Gew-% eines Füllstoffes oder Füllstoffgemisches und anschließender Trocknung. Die Trocknung kann bei Umgebungstemperatur bis etwa 150 °C erfolgen.

Eine besondere Ausführungsform der Erfindung betrifft ein nicht brennbares Faserprodukt, enthaltend
30 bis 70 Gew.-% Cellulosefasern;
15 bis 45 Gew.-% Calciumcarbonat;
0,01 bis 1 Gew.-% kationisches Tensid;
0,05 bis 1 Gew-% biologisch wirksamem, in Wasser schwer löslichem, grenzflächenaktivem Wirkstoff oder 0,25 bis 6,5 Gew.-% Calciumperoxid;
einem restlichen Gehalt an Füllstoffen;
und gegebenenfalls einem oder mehreren weiteren bioziden Mitteln. Das Produkt enthält zweckmäßig zusätzlich 0,01 bis 1 Gew.-% eines nichtionischen Tensides.

Als kationisches Tensid kann allgemein eine Einzelverbindung oder ein Gemisch eingesetzt werden. Bevorzugt sind solche, bei denen die Stickstoff-Gruppe mit zwei langen und zwei kurzen Alkylresten substituiert ist, z.B. Dimethyldidecylammoniumchlorid.

Wenn kationische und nichtionische Tenside gemeinsam in einem vorteilhaften Faserprodukt der Erfindung verarbeitet werden, erfolgt die Zugabe des kationischen Tensids zweckmäßig vor der Zugabe des Niotensids, um die Aufhebung der eingetretenen Phasentrennung besser beobachten zu können.

Als biologisch wirksamer, in Wasser schwer löslicher, grenzflächenaktiver Wirkstoff können einerseits beispielsweise Thiuroniumsalze eingesetzt werden, z.B. Tetradecylthiuroniumbromid, wobei Gemische ebenfalls möglich sind. Andererseits kann, wie bereits ausgeführt, auch Calciumperoxid als biolo-gisch wirksamer Stoff verwendet werden.

Als Füllstoffe können beispielweise solche aus der Gruppe eingesetzt werden, die aus Al₂O₃, SiO₂, MgO, Calcium- und Alumosilicaten, BaSO₄, Na₂CO₃, KCl, K₂CO₃, CaCO₃, CaF, Eisenoxiden und deren Gemischen besteht.

Ohne an eine Theorie gebunden sein zu wollen, führt wahrscheinlich die Kombination von nichtionischen Tensiden und Aluminiumhydroxidchlorid zu einer überraschend feinen Verteilung der Aluminiumverbindung auf der Faser und in allen Faserhohlräumen, so daß nach der Trocknung der Faser, der Freisetzung von HCl und gegebenenfalls der HCl-Reaktion mit einem Füllstoff wie CaCO₃, das gebildete Aluminiumoxid in und auf der Faser verbleibt und nach dem Verkohlen der Faser bei Flammeneinwirkung ein nicht nachglimmendes Gerüst von Aluminiumoxid zurückbleibt.

Besonders bemerkenswert ist, daß selbst bei offener Beflammung eines erfindungsgemäßen Faserproduktes mit z.B. 70 % Cellulosefasern kein Brennen der Fasern auftritt, sondern nur ein Verkohlungsvorgang stattfindet. Dieser Verkohlungsvorgang kommt nach Entfernung der Zündquelle sofort zum Erliegen.

Auf diese Weise werden mit relativ geringen Mengen an Aluminiumoxid in einem Faserprodukt z.B. bei Faserdichten von etwa 0,08 t/m³ Werte für Baustoffe hinsichtlich ihres Brandverhaltens für die Baustoffklasse B1 (schwerentflammbare Baustoffe) gemäß DIN 4102 (Mai 1981) erreicht. Eine solche Baustoffklasse ist für brennbare Baustoffe die maximal erreichbare Einstufung und stellt gegenüber den bisher mit Cellulosefasern verarbeiteten Baustoffen und deren Bor-haltiger Ausrüstung eine deutliche Verbesserung dar.

Ein Baustoff erfüllt die Voraussetzung der Baustoffklasse B1, wenn er die Prüfung im Brandschacht besteht, bei der der Mittelwert der Restlängen jedes Probekörpers mindestens 15 cm beträgt und dabei keine Probe eine Restlänge von 0 aufweist, wenn weiterhin bei keinem Versuch die mittlere Rauchgastemperatur 200 °C überschritten wird und wenn die Proben nach einem weiteren Untersuchungsspektrum keinen Anlaß zu Beanstandungen geben.

Das erfindungsgemäße nicht brennbare Faserprodukt kann als verblasbares Wärmedämmaterial oder als Formkörper, aber auch zur Herstellung von isolierenden und gleichzeitig flammwidrigen Auskleidungen eingesetzt werden.

Das Material läßt sich gegebenenfalls auch durch Aufschäumen und durch anschließende Zerkleinerung des trockenen Schaumes in eine feinfaserige Struktur überführen. In dieser Form kann es in Hohlräume eingeblasen werden, um dort als Dämmstoff zu wirken. Es besteht auch die Möglichkeit, das Produkt in angefeuchtetem Zustand an z.B. senkrechte Wände zu kleben, um einen gleichmäßig auskleidenden Effekt zu erzielen.

Es kann auch zusätzlich ein Bindemittel in einem vorteilhaften Faserprodukt nach der Erfindung enthalten sein, z.B. um eine bessere Verpreßbarkeit zu Platten oder anderen Formkörpern zu gewährleisten. Als Bindemittel sind geeignet Phenolformaldehydharze, Melaminharze, Mg/Ca-Lignat, Tallharz usw.

Beim Verpressen ist ein vorheriger Bindemittelzusatz möglich, jedoch in dem Fall, daß das Produkt noch feucht bereits weiterverarbeitet wird, nicht zwingend erforderlich.

Eine weitere Möglichkeit zur Herstellung eines Schüttdämmstoffes, in diesem Fall mit deutlich höherer Dichte, besteht im Mahlen des bereits ausgerüsteten Ausgangsmaterials und dem Versetzen des Mahlgutes mit geringen Mengen Zement, wobei je nach Verfahrensgestaltung entweder ein weiteres feinfaseriges Verblasmaterial oder aber ein grobkörniges, schüttfähiges Granulat anfällt, das in Hohlräume eingebracht wird.

Schließlich kann das körnige Ausgangsgemisch auch mit wäßrigen Lösungen konditioniert und anschließend in einem schnellaufenden Schlag- und Schneidwerk zerfasert werden.

Es werden gute Dämmeigenschaften erhalten. In Abhängigkeiten von der Verdichtung des Produktes liegt die Wärmeleitfähigkeit im Bereich von etwa 0,04-0,07 W/mK. Werte um 0,05 W/mK werden bei Dichten von ca. 0,2 kg/dm³ und Schichtdicken von ca. 25 mm erreicht.

In einer spezifischen Ausführungsform der Erfindung ist wesentlicher Bestandteil des kationischen Tensides oder Tensidgemisches eine Rezeptur aus kationischen Tensiden, die zum einen die nötige Schaumstabilität erzeugt, zum anderen aber gewährleistet, daß sowohl Tensid, als auch enthaltene Wirkstoffe auf die Faser aufziehen und dort als stationäre Ausrüstung auch und besonders nach dem Trocknungsvorgang verbleiben. Für extrem feinfaserige Strukturen kann dann zusätzlich ein nichtionisches Tensid zum Einsatz kommen.

Die Erfindung betrifft daher sowohl die Verwendung des oben beschriebenen Faserproduktes als verblasbares Dämmaterial, als auch ein zu Formkörpern verpreßbares Material, sowie ein Material zur Herstellung von flammwidrigen und wärmedämmenden Auskleidungen, z.B. Wandplatten, Spritztapeten etc. Außerdem lassen sich aus dem beschriebenen Fasergrundstoff gebundene Granalien herstellen, die für Dämmschüttungen aber auch zur Wärme- und Trittschalldämmumg von Fußböden geeignet sind.

Als Dämmstoff kann das Faserprodukt eine Restfeuchte von ca. 5 bis 12 % aufweisen. Eine nachträgliche Durchfeuchtung des eingebauten Faserproduktes führt nicht zum Auswaschen oder zur Umverteilung der Ausrüstungsstoffe, wie es im Falle einer ausschließlichen Verwendung von wasserlöslichen ionischen Verbindungen (Borsäure, Borax etc.) der Fall wäre. Das Produkt bleibt, im Gegensatz dazu, in seiner ursprünglichen Stoffverteilung im wesentlichen erhalten.

Das Material ist ab einer Mindestverdichtung (Dichte ≈ 0,1) volumenbeständig und setzungssicher.

Die biozide Ausrüstung des Faserproduktes wird verbessert durch kationische grenzflächenaktive Stoffen, z.B. Didecyldimethylammoniumchlorid oder andere wirksame Biozide z.B. N,N-Bis-(3-aminopropyl)-N-dodecylamin.

Biologisch besonders wirksam sind in Wasser schwerlösliche grenzflächenaktive Verbindungen, wie Thiuroniumsalze, z.B. Tetradecyl-thiuroniumbromid. In gleicher Weise kann auch Calciumperoxid eingesetzt werden. Zusätzliche biozide Mittel sind schwerlösliche basische Kupferverbindungen in der Gesamtmenge unter 1 % des Materials oder Formulierungen von kationischen Tensiden mit Zement.

Der Cellulosegehalt liegt vorzugsweise im Bereich von 70 bis 97 Gew. % bei der Herstellung von Faserplatten und einem im wesentlichen hohe Faseranteile enthaltenden Ausgangsmaterial, z.B. Altpapier.

Bei Einsatz eines sonstigen cellulosehaltigen Abfallproduktes mit geringerem Celluloseanteil liegt der Cellulosegehalt im Bereich von 25 bis 60 Gew-%, vorzugsweise 30 bis 40 Gew-%. Bei einem solchen Material wird der Vorteil in der Form des erfindungsgemäßen Faserproduktes besonders deutlich, da hier Cellulose in der Papierkreislauf zurückgeführt wird, die anderenfalls den Kreislauf durch z.B. Verbrennung vollständig verlassen würde.

Neben den genannten Füllstoffen aus der Reihe Aluminiumoxid, Siliciumdioxid, Magnesiumoxid, Natriumtetraborat, Calciumund Alumosilikate, Bariumsulfat, Calciumcarbonat, Soda, Pottasche, Calciumfluorid und Eisenoxid sowie deren Gemischen können auch andere bekannte Füllstoffe enthalten sein, sofern sie die wärmedämmenden und flammwidrigen Eigenschaften nicht nachteilig beeinflussen.

Besonders vorteilhaft für das erfindungsgemäße Produkt ist es, daß Borsäure und deren Salze, wie z.B. Natriumtetraborat, die normalerweise in größeren Mengen enthalten sein müssen, als Ausrüstungsstoffe nicht erforderlich sind.

Weiterhin bilden überraschenderweise sonstige cellulosehaltige Abfallprodukte, die gegenwärtig nicht weiterverarbeitet werden können und stark geruchsbelastet sind, mit Calciumcarbonat, kationischen Tensiden, schwerlöslichem grenzflächenaktivem Wirkstoff und Füllstoffen sowie gegebenenfalls zusätzlichen, ebenfalls handelsüblichen bioziden Mitteln nach dem Mischen eine im wesentlichen geruchlose und feinfaserige Struktur, die ohne Schwierigkeiten verpreßt oder - nach dem Trocknen - verblasen werden kann. Als Füllstoff kann auch Al₂O₃ angesehen werden, das in Form des Aluminiumhydroxidchlorides eingebracht wird, zweckmäßig zusammen mit einem nichtionischen Tensid.

Eine weitere vorteilhafte Ausführungsform des Dämmstoffes der Erfindung besteht darin, anstelle des biologisch wirksamen, in Wasser schwer löslichen, grenzflächenaktiven Wirkstoffes oder von Calciumperoxid als wirksamen Stoff Zement in einer Menge von 5 bis 35 Gew-% einzubringen.

Die Erfindung soll nachstehend durch Beispiele näher erläutert werden. Alle Prozentangaben sind Gewichtsprozente.

### Beispiel 1

8 kg Altpapierfasern mit einem Celluloseanteil von 45 % werden mit 297 g Soda (Na₂CO₃) vermischt.

Der so vorbehandelte Ausgangsstoff wird mit 2,5 l einer Lösung benetzt, die eine 7%-ige Lösung an Polyaluminiumhydroxid-chlorid (Gehalt an Al₂O₃ im Endprodukt = 2,2 %) darstellt. Die Benetzung erfolgt beispielsweise durch intensive Besprühung.

Außerdem sind 0,16 % eines Fettalkoholoxethylates und 0,08 % Didecyldimethylammonium-chlorid (Gehalt im Endprodukt = 0,05 %) enthalten.

Wenn sichergestellt ist, daß alle Fasern von der Lösung benetzt sind, werden sie in Hordentrocknern innerhalb von ca. 1 h entwässert. Die Restfeuchte beträgt ca. 10 % der Gesamtmasse und hat keinen Einfluß auf die Eigenschaften des Schüttmaterials. Das Produkt fällt als faseriges feinteiliges Produkt an, das als Schütt- bzw. Verblasedämmstoff eingesetzt werden kann. Die einzustellende Dichte wird je nach Einsatzart zwischen 0,06 und 0,2 ^{g}/ₘₗ eingestellt, und die Wärmeleitfähigkeit liegt nicht über 0,045 ^{W}/_{mK} · Die erhaltene Schüttung ist weder entzündbar, noch glimmt sie, nach Entfernung der Zündquelle, nach.

### Beispiel 2

7 kg Altpapierfasern mit einem Celluloseanteil von 45 % und 1 kg Jutefasern mit einem Cellulosegehalt (bei 10 % Feuchtigkeit) von 64 % werden mit 210 g Löschkalk [Ca(OH)₂] und einem Bindemittel vermischt.

Das so vorbehandelte Ausgangsgemisch wird mit 3 l einer Lösung benetzt, die eine 6 %-ige Lösung an Polyaluminiumhydroxid-chlorid (Gehalt an Al₂O₃ im Endprodukt = 2,2 %) darstellt. Außerdem sind 0,32 % eines Fettalkoholoxethylates und 0,12 % Didecyldimethylammonium-chlorid (Gehalt im Endprodukt 0,05 %) enthalten.

Wenn sichergestellt ist, daß alle Fasern von der Lösung benetzt sind, wird die genaue Masse des Gemisches ermittelt. In einer Preßform wird auf eine Enddichte von 0,08 ^{g}/_{cm}, eingestellt, gegebenenfalls ein Bindemittel hinzugesetzt und die Platte bei 110 °C innerhalb von 15 min getrocknet. Die erhaltene Platte ist weder entzündbar, noch glimmt sie, nach Entfernung der Zündquelle, nach.

### Beispiel 3

10 kg Kiefernholz-Fasern mit einem Celluloseanteil von 42 % werden mit 459 g Löschkalk [Ca(OH)₂] und einem Bindemittel vermischt.

Das so vorbehandelte Ausgangsgemisch wird mit 2,7 1 einer Lösung benetzt, die eine 13 %-ige Lösung an Polyaluminiumhydroxid-chlorid (Endgehalt an Al₂O₃ im Produkt = 3,5 %) darstellt. Außerdem sind 0,8 % eines Fettsäurepolyethylenglycolesters und 0,02 % Didecyldemethylammonium-chlorid (Gehalt im Endprodukt = 0,015 %) enthalten. Wenn sichergestellt ist, daß alle Fasern von der Lösung benetzt sind, wird die genaue Masse des Fasermaterials ermittelt. In einer Preßform wird auf eine Enddichte von 0,08 ^{g}/_{cm³} eingestellt und die Platte bei 110 °C innerhalb von 15 min getrocknet. Die erhaltene Platte ist weder entzündbar, noch glimmt sie, nach Entfernung der Zündquelle, nach.

### Beispiel 4

10 kg geshreddertes Getreidestroh mit einem Celluloseanteil von 32 % werden mit 340 g Löschkalk [Ca(OH)₂] und einem Bindemittel vermischt.

Das so vorbehandelte Ausgangsgemisch wird mit 2 l einer Lösung benetzt, die eine 13 %-ige Lösung an Polyaluminiumhydroxid-chlorid (Gehalt an Al₂O₃ im Endprodukt = 2,6 %) darstellt. Außerdem sind 3,5 % eines Fettaminethoxylates und 1,8 % Didecyldemethylammonium-chlorid (Gehalt im Endprodukt = 0,5 %) enthalten. Wenn sichergestellt ist, daß alle Fasern von der Lösung benetzt sind, wird die genaue Masse des Gemisches ermittelt. In einer Preßform wird auf eine Enddichte von 1 ^{g}/_{cm}3 eingestellt und die Platte bei 110 °C innerhalb von 15 min getrocknet. Die erhaltene Platte ist weder entzündbar, noch glimmt sie, nach Entfernung der Zündquelle, nach.

### Beispiel 5

5 kg Jute aus verbrauchten Säcken mit einem Celluloseanteil von 64 % werden mit 5 kg Hanf mit einem Celluloseanteil von 67 % gemischt und mit 340 g Löschkalk [Ca(OH)₂] versetzt.

Das so vorbehandelte Ausgangsgemisch wird mit 4 l einer Lösung benetzt, die eine 7 %-ige Lösung an Polyaluminiumhydroxid-chlorid (Endgehalt an Al₂O₃ im Produkt = 2,6 %) darstellt. Außerdem sind 0,05 % eines Fettalkoholoxethylates und 0,05 % Didecyldemethylammonium-chlorid (Gehalt im Endprodukt = 0,02 %) enthalten.

Wenn sichergestellt ist, daß alle Fasern von der Lösung benetzt sind, wird bei 60 °C getrocknet. Die resultierenden Fasern sind weder entzündbar, noch glimmen sie, nach Entfernung der Zündquelle, nach.

Besonders interessant ist dieses Ergebnis bei Jute, die bisher durch ihre schlauchartigen Hohlfasern und der daraus resultierenden guten Sauerstoffversorgung des Faserendes im Brandfall kaum zu löschen war.

### Beispiel 6

10 kg Buchenzellstoff mit einem Celluloseanteil von 97 % werden mit 3 1 einer Lösung benetzt, die eine 17 %-ige Lösung an Polyaluminiumhydroxid-chlorid (Gehalt an Al₂O₃ im Endprodukt

5 %) darstellt. Außerdem sind 0,8 % eines Fettalkoholoxethylates enthalten. Wenn sichergestellt ist, daß alle Fasern von der Lösung benetzt sind, wird bei 50 °C getrocknet.

Die resultierenden Fasern sind weder entzündbar, noch glimmen sie, nach Entfernung der Zündquelle, nach.

### Beispiel 7

10 kg Baumwolle mit einem Celluloseanteil von 82 % werden mit 340 g Löschkalk [Ca(OH)₂] versetzt.

Das so vorbehandelte Ausgangsgemisch wird mit 4 l einer Lösung benetzt, die eine 7 %-ige Lösung an Polyaluminiumhydroxid-chlorid (Endgehalt an Al₂O₃ im Produkt = 2,6 %) darstellt. Außerdem sind 0,55 % eines Fettsäurealkanolamidpolyethylenglykolethers und 0,05 % Didecyldimethylammonium-chlorid (Gehalt im Endprodukt = 0,02 %) enthalten. Wenn sichergestellt ist, daß alle Fasern von der Lösung benetzt sind, wird bei 60 °C getrocknet.

Die resultierenden Fasern sind weder entzündbar, noch glimmen sie, nach Entfernung der Zündquelle, nach.

### Beispiel 8

10 kg Tannenholz-Leisten mit einem Celluloseanteil von 42 % werden in eine 6 %-ige Lösung an Polyaluminiumhydroxid-chlorid getaucht, die weiterhin 0,32 % eines Fettalkoholoxethylates und 0,12 % Didecyldimethylammonium-chlorid enthält. Nach dem Tränken und Abtropfen werden die Leisten an der Luft bzw. auf Trockenregalen getrocknet. Die resultierenden Leisten sind nicht mehr entzündbar und glimmen nach Entfernung der Zündquelle nicht nach. Auch der Verkohlungsprozeß wird im Vergleich zu anders behandeltem Material deutlich verzögert.

Der schließliche Gehalt an Al₂O₃ im Produkt liegt bei 2,2 %.

Zur Verkürzung der Trockenzeit und Verbesserung des Eindringens der Lösung in die Holzstruktur kann auch unter Druck in üblichen Hochdruck-Tränkanlagen gearbeitet werden.

### Beispiel 9 Faserdämmaterial durch Schäumung

Es wurden 100 g eines Gemisches aus 23,5 g Abfallcellulose, 27 g Calciumcarbonat, 4 g Siliziumdioxid, 3 g Aluminiumoxid, 1 g Eisen-III-oxid, 5 g Magnesiumcarbonat, 0,2 g Didecyldimethylammoniumchlorid, 1 g Natriumtetraborat, 0,01 g einer schwerlöslichen Kupferverbindung und 5 g Calciumhydroxid mit 33,9 ml Wasser hergestellt. Dieses Ausgangsprodukt ist leicht handhabbar und transportierbar.

Das Ausgangsgemisch wird in einer Mischtrommel mit weiteren 40 ml Wasser intensiv vermischt, ggf. mit 1 g nichtionischen Tensids versetzt und mit 10 ml Wasserstoffperoxid geschäumt. Der Schaum wird noch 10 sek durchmischt und anschließend, kurz bevor die Gasentwicklung nachläßt, auf ebene Trockenregale verbracht, die eine Trocknung sowohl von oben, als auch von unten gestatten. Der wäßrige Schaum wurde dann bei 80° C getrocknet. Das entwässerte Produkt durchlief eine Zerkleinerung in einer Messerwalze und fiel als faseriges feinteiliges Produkt an, das anschließend in einen Wandhohlraum von 24 cm Dicke eingeblasen wurde. Nach vollständiger Füllung des Hohlraumes und einer leichten Verdichtung auf ca. 300 g/dm³, wurde eine Wärmeleitfähigkeit von 0,06 W/mK ermittelt.

### Beispiel 10 Faserdämmaterial durch trockene Ausrüstung

Es wurden 1000 g eines Gemisches aus 235 g Abfallcellulose, 270 g Calciumcarbonat, 40 g Siliziumdioxid, 3 g Aluminiumoxid, 1 g Eisen-III-oxid, 50 g Magnesiumcarbonat, 2 g Didecyldimethylammoniumchlorid, 10 g Natriumtetraborat, 0,1 g einer schwerlöslichen Kupferverbindung und 50 g Calciumhydroxid mit 339 ml Wasser hergestellt. Dieses Ausgangsprodukt entspricht dem in Beispiel 1 verwendeten.

Das Ausgangsgemisch wird zusätzlich mit 100 ml einer Lösung, die 2 % Didecyldimethylammoniumchlorid und 2 % N,N-bis-(3-Aminopropyl)-N-dodecylamin enthält angefeuchtet, in einer Messerwalze zerkleinert und homogenisiert und anschließend in einer Mischtrommel mit 100 g Zement vermischt. Es wird ein faseriges feinteiliges Produkt erhalten, das eine deutlich höhere Schüttdichte als das in Beispiel 1 hergestellte Material aufweist.

Zum Abbinden des Zementes wird das Produkt bei Raumtemperatur unter Luftzutritt 48 h gelagert und kann anschließend ohne nochmalige Zerkleinerung in einen Wandhohlraum von 12 cm Dicke eingeblasen wurde. Nach vollständiger Füllung des Hohlraumes wird ohne zusätzliche Komprimierung eine Dichte von ca. 720 g/dm³ festgestellt und eine Wärmeleitfähigkeit von 0,04 W/mK ermittelt.

### Beispiel 11 Dämmaterial durch trockene Ausrüstung und Granulierung

Es wurden 1000 g eines Gemisches aus 235 g Abfallcellulose, 270 g Calciumcarbonat, 40 g Siliziumdioxid, 3 g Aluminiumoxid, 1 g Eisen-III-oxid, 50 g Magnesiumcarbonat, 2 g Didecyldimethylammoniumchlorid, 10 g Natriumtetraborat, 0,1 g einer schwerlöslichen Kupferverbindung und 50 g Calciumhydroxid mit 339 ml Wasser hergestellt. Dieses Ausgangsprodukt entspricht dem in Beispiel 1 verwendeten.

Das Ausgangsgemisch wird noch feucht in einer Messerwalze grob vorzerkleinert, in einer Mischtrommel mit 419 g Zement vermischt und anschließend mit 410 ml Wasser versetzt. Es wird ein grobkörniges, granulatartiges Produkt erhalten, das als Schüttung in Hohlwände aber auch zur Trittschall- und Wärmedämmung in Fußböden eingebracht werden kann.

Zum Abbinden des Zementes wird das Produkt bei Raumtemperatur unter Luftzutritt mindestens 48 h gelagert und kann anschließend ohne nochmalige Bearbeitung in einen Wandhohlraum von 12 cm Dicke eingeblasen wurde. Nach vollständiger Füllung des Hohlraumes wird ohne zusätzliche Komprimierung eine Dichte von ca. 720 g/dm³ festgestellt und eine Wärmeleitfähigkeit von 0,04 W/mK ermittelt.

### Beispiel 12 Formteile aus gefüllter Abfallcellulose durch Schäumung und anschließender Verpressung

Es wurden 2.700 g eines Gemisches aus 634,5 g Abfallcellulose, 729 g Calciumcarbonat, 108 g Siliziumdioxid, 8,1 g Aluminiumoxid, 2,7 g Eisen-III-oxid, 135 g Magnesiumcarbonat, 5,4 g Didecyldimethylammoniumchlorid, 27 g Natriumtetraborat, 0,3 g einer schwerlöslichen Kupferverbindung und 135 g Calciumhydroxid mit 915 ml Wasser hergestellt. Dieses Ausgangsprodukt entspricht dem in Beispiel 1 verwendeten.

Das Ausgangsgemisch wird in einer Mischtrommel mit weiteren 40 ml Wasser intensiv vermischt, gegebenenfalls mit 1 g nichtionischen Tensids versetzt und mit 100 ml Wasserstoffperoxid geschäumt. Der Schaum wird noch ca. 10 sek durchmischt und anschließend, direkt bevor die Gasentwicklung nachläßt, in eine Form überführt und mit einem Druck von 150 kg/m² verdichtet (p ≈ 600 g/dm³). Die Formkörper mit den Abmaßen 300x300x50 mm (B/L/H) wurden auf ebene Trockenregale verbracht, die eine gleichmäßige Belüftung von allen Seiten gestatten und bei 80° C getrocknet. Nach vollständiger Verkleidung einer Wand mit einer 50 mm starken Platte, wurde eine Wärmeleitfähigkeit von 0,07 W/mK ermittelt. Die Platten können durch Kleben, aber auch mittels Leisten nach herkömmlicher Technologie (Mineralfaserplatten) befestigt werden.

### Beispiel 13 Faserdämmaterial durch Mahlen

Es wurden 2.700 g eines Gemisches aus 1634,5 g Abfallcellulose, 675 g Calciumcarbonat, 108 g Siliziumdioxid, 8,1 g Aluminiumoxid, 2,7 g Eisen-III-oxid, 135 g Magnesiumcarbonat, 5,4 g Didecyldimethylammoniumchlorid, 0,3 g einer schwerlöslichen Kupferverbindung mit 131,5 ml Wasser hergestellt.

Das Ausgangsgemisch wurde in einer Mischtrommel nacheinander mit 300 ml einer 10 %-igen Lösung von technischem Aluminiumhydroxidchlorid in Wasser und daran anschließend mit 300 ml einer 1%-igen Tetradecyl-thiuroniumbromid-Lösung (Wasser:Isopropanol=2:1) benetzt. Nach einer ca. zehnminütigen Einwirkzeit wurde das feuchte grobkörnige Produkt in einem schnellaufenden Schlag- und Schneidwerk zerfasert und in Trockenregalen bei 80 °C getrocknet. Das Produkt fiel als faseriges feinteiliges Produkt an, das anschließend in einen Wandhohlraum von 24 cm Dicke eingeblasen wurde. Nach vollständiger Füllung des Hohlraumes und einer leichten Verdichtung auf ca. 200 g/dm³, wurde eine Wärmeleitfähigkeit von 0,05 W/mK ermittelt.

## Patentansprüche

1. Nicht brennbares Faserprodukt, **gekennzeichnet durch** ein Gehalt an
30 bis 97 Gew.-% einer cellulosehaltigen Faser oder eines cellulosehaltigen Fasergemisches;
0,01 bis 1 Gew.-% eines nichtionischen Tensides; und
1 bis 5 Gew.-% auf und in der Faser fein verteilten Aluminiumoxids.

2. Faserprodukt nach Anspruch 1, **dadurch gekennzeichnet, daß** es 0,005 bis 1,0 Gew-% eines biologisch wirksamen, grenzflächenaktiven Wirkstoffes enthält.

3. Faserprodukt nach Anspruch 1 oder 2, **dadurch gekennzeichnet, daß** es 0 bis 68 Gew-% Füllstoffe enthält.

4. Faserprodukt nach einem der Ansprüche 1 bis 3, **dadurch gekennzeichnet, daß** es zusätzlich ein Bindemittel enthält.

5. Faserprodukt nach einem der Ansprüche 1 bis 4, **dadurch gekennzeichnet, daß** die cellulosehaltige Faser oder das Fasergemisch ausgewählt ist unter Cellulose, ligninhaltige Holzstrukturen wie Kompaktholz, Späne oder Holzschliff, Rinde, Borke, Stroh, Flachs, Hanf, Jute, Baumwolle, Kokos, Altpapier, sonstige cellulosehaltige Abfallprodukte und Gemische davon.

6. Faserprodukt nach Anspruch 2, **dadurch gekennzeichnet, daß** der biologisch wirksame grenzflächenaktive Wirkstoff ein kationisches Tensid, insbesondere ein in Wasser schwer lösliches kationisches Tensid oder ein Gemisch davon ist.

7. Faserprodukt nach Anspruch 4, **dadurch gekennzeichnet, daß** es in Form einer Platte vorliegt.

8. Faserprodukt nach Anspruch 2, **gekennzeichnet durch** ein Gehalt an
30 bis 70 Gew.-% Cellulosefasern;
15 bis 45 Gew.-% Calciumcarbonat;
0,01 bis 1 Gew.-% kationisches Tensid;
0,05 bis 1 Gew-% biologisch wirksamem, in Wasser schwer löslichem, grenzflächenaktivem Wirkstoff oder 0,25 bis 6,5 Gew.-% Calciumperoxid;
einem restlichen Gehalt an Füllstoffen;
und gegebenenfalls einem oder mehreren weiteren bioziden Mitteln.

9. Faserprodukt nach Anspruch 8, **gekennzeichnet durch** ein Gehalt an
30 bis 70 Gew.-% Cellulosefasern;
15 bis 45 Gew.-% Calciumcarbonat;
0,01 bis 1 Gew.-% kationisches Tensid;
5 bis 35 Gew-% Zement;
einem restlichen Gehalt an Füllstoffen aus der Gruppe, die aus Al₂O₃, SiO₂, MgO, Calcium- und Alumosilicaten, BaSO₄, Na₂CO₃, KCl, K₂CO₃, CaF, Eisenoxiden und deren Gemischen besteht; und
gegebenenfalls einem oder mehreren weiteren bioziden Mitteln.

10. Faserprodukt nach Anspruch 3, **dadurch gekennzeichnet, daß** der Füllstoff aus der Gruppe, die aus Al₂O₃, SiO₂, MgO, Calcium- und Alumosilicaten, BaSO₄, Na₂CO₃, CaCO₃, KCl, K₂CO₃, CaF, Eisenoxiden und deren Gemischen besteht, ausgewählt ist.

11. Faserprodukt nach Anspruch 1, **dadurch gekennzeichnet, daß** das nichtionische Tensid ein Fettalkoholethoxylat, Alkylphenylethoxylat, Fettaminethoxylat, Fettsäureesterethoxylat oder Gemisch davon ist, insbesondere ein Fettalkoholethoxylat von C₁₆/C₁₈-Alkoholen mit 16-20 Ethoxy-Einheiten.

12. Verfahren zur Herstellung eines nicht brennbaren Faserproduktes nach Anspruch 1, **dadurch gekennzeichnet, daß** eine wäßrige 1 bis 15 Gew-%ige Lösung von Aluminiumhydroxidchlorid, die 0,05 bis 1 Gew-% eines nichtionischen Tensides enthält, auf eine cellulosehaltige Faser oder ein cellulosehaltiges Fasergemisch durch ein Misch-, Imprägnier-, Tauch- oder Sprühverfahren aufgetragen wird und danach ein Trockenvorgang erfolgt, wobei das Faserprodukt neben 30 bis 97 Gew-% Faser weiterhin 0 bis 68 Gew-% eines Füllstoffes oder Füllstoffgemisches enthält, bezogen auf das Gesamtgewicht.

13. Verwendung des Faserproduktes nach einem der Ansprüche 1 bis 11 als verblasbares und nicht brennendes oder nicht glimmendes Wärmedämmaterial.

14. Verwendung des Faserproduktes nach einem der Ansprüche 1 bis 11 zur Herstellung von flammwidrigen und wärmedämmenden Formkörpern.

## Claims

1. A nonflammable fiber product, comprising:
30 to 97 wt% of a cellulose-based fiber or a cellulose-based fiber mixture; 0.01 to 1 wt% of a nonionic surfactant; and
1 to 5 wt% aluminum oxide distributed finely in and on the fiber.

2. A fiber product according to claim 1, wherein it contains 0.005 to 1.0 wt% of a biologically active surface-active ingredient.

3. A fiber product according to claim, 1 or 2, wherein it contains 0 to 68 wt% fillers.

4. A fiber product according to one of claims 1 through 3, wherein it also contains a binder.

5. A fiber product according to one of Ccaims 1 through 4, wherein the cellulose-based fibers or the fiber mixture is/are selected from cellulose, lignin-containing wood structures and compact wood, wood chips or wood pulp, bark, straw, flax, hemp, jute, cotton, coconut, recycled paper, other cellulose-based waste products and mixtures thereof.

6. A fiber product according to claim 2, wherein the biologically active surface-active ingredient is a cationic surfactant especially a sparingly water-soluble cationic surfactant or a mixture thereof.

7. A fiber product according to claim 4, wherein it is in the form of a board.

8. A fiber product according to claim 2, comprising:
30 to 70 wt% cellulose fibers;
15 to 45 wt% calcium carbonate;
0.01 to 1 wt% cationic surfactant;
0.05 to 1 wt% biologically active, sparingly water-soluble
surface-active ingredient or 0.25 to 6.5 wt% calcium peroxide;
the remainder consisting of fillers;
plus optionally one or more additional biocidal agents.

9. A fiber product according to claim 8, comprising
30 to 70 wt% cellulose fibers; 15 to 45 wt% calcium carbonate;
0.01 to 1 wt% cationic surfactant; 5 to 35 wt% cement;
the remainder consisting of fillers from the group consisting of Al₂O₃, SiO₂, MgO, calcium silicates and alumino silicates, BaSO₄, Na₂CO₃, KCl, K₂CO₃, CaF, iron oxides and mixtures thereof; and optionally one or more other biocidal agents.

10. A fiber product according to claim 3 through 8, wherein the filler is selected from the group consisting of Al₂O₃, SiO₂, MgO, calcium silicates and alumino silicates, BaSO₄, Na₂CO₃, KCl, K₂CO₃, CaF, iron oxides and mixtures thereof.

11. A fiber product according to claim 1, wherein the nonionic surfactant is a fatty alcohol ethoxylate, an alkyl phenyl ethoxylate, a fatty amine ethoxylate, a fatty acid ester ethoxylate or a mixture thereof, in particular a fatty alcohol ethoxylate of C₁₆/C₁₈ alcohols with 16 to 20 ethoxy units.

12. A process for producing a nonflammable fiber product according to claim 1, wherein an aqueous 1 to 15 wt% solution of aluminum hydroxychloride containing 0.05 to 1 wt% of a nonionic surfactant is applied to a cellulose-based fiber or a cellulose-based fiber mixture by a mixing, impregnating, dipping or spraying method and then drying, where the fiber product also contains 0 to 68 wt% of a filler or a filler mixture, based on the total weight, in addition to 30 to 97 wt% fibers.

13. A use of the fiber product according to one of claims 1 through 11 as a blowable and nonflammable or non-smouldering thermal insulation material.

14. A use of the fiber product according to one of claims 1 through 11 for producing flame-retardant and thermally insulating molded articles.

## Revendications

1. Produit fibreux non inflammable, **caractérisé par** une teneur se composant de :
30 à 97 % en poids d'une fibre cellulosique ou d'un mélange de fibres cellulosiques ;
0,01 à 5 % en poids d'un détergent non-ionique ; et
1 à 5 % en poids d'oxyde d'aluminium finement réparti sur et dans la fibre.

2. Produit fibreux selon la revendication 1, **caractérisé en ce qu'**il comprend de 0,005 à 1,0 % en poids d'un principe actif biologiquement efficace et tensioactif.

3. Produit fibreux selon la revendication 1 ou 2,
**caractérisé en ce qu'**il comprend de 0 à 68 % en poids de matériaux de remplissage.

4. Produit fibreux selon l'une quelconque des revendications 1 à 3, **caractérisé en ce qu'**il comprend en outre un liant.

5. Produit fibreux selon l'une quelconque des revendications 1 à 4, **caractérisé en ce que** la fibre ou le mélange de fibres cellulosiques est choisi parmi la cellulose, des structures de bois en lignine, telles que du bois compact, des copeaux ou du bois de pâte mécanique, des écorces, des croûtes, de la paille, du lin, du chanure, du jute, de la laine, du coco, de vieux papiers, d'autres déchets contenant de la cellulose et des mélanges de ceux-ci.

6. Produit fibreux selon la revendication 2, **caractérisé en ce que** le principe actif biologiquement efficace et tensioactif est un détergent cationique, notamment un détergent cationique difficilement soluble dans l'eau ou un mélange de celui-ci.

7. Produit fibreux selon la revendication 4, **caractérisé en ce qu'**il est présent sous la forme d'une plaque.

8. Produit fibreux selon la revendication 2, **caractérisé par** une teneur se composant de :
30 à 70 % en poids de fibre cellulosique ;
15 à 45 % en poids de carbonate de calcium ;
0,01 à 1 % en poids de détergent cationique ;
0,05 à 1 % en poids de principe tensioactif biologiquement efficace difficilement soluble dans l'eau ou 0,25 à 6,5% en poids de peroxyde de calcium ;
pour le reste, des matériaux de remplissage ;
et le cas échéant un ou plusieurs autres agents biocides.

9. Produit fibreux selon la revendication 8, **caractérisé par** une teneur se composant de :
30 à 70 % en poids de fibres cellulosiques ;
15 à 45 % en poids de carbonate de calcium ;
0,01 à 1 % en poids de détergent cationique ;
5 à 35 % en poids de ciment ;
pour le reste, des matériaux de remplissage parmi le groupe qui se compose d'Al₂O₃, SiO₂, MgO, des silicates de calcium et des aluminosilicates, BaSO₄, Na₂CO₃, KCl, K₂CO₃, CaF, des oxydes de fer et leurs mélanges ; et
le cas échéant, un ou plusieurs autres agents biocides.

10. Produit fibreux selon la revendication 3, **caractérisé en ce que** le matériau de remplissage est choisi parmi le groupe se composant d'Al₂O₃, SiO₂, MgO, des silicates de calcium et des aluminosilicates, BaSO₄, Na₂CO₃, CaCo₃, KCl, K₂CO₃, CaF, des oxydes de fer et leurs mélanges.

11. Produit fibreux selon la revendication 1, **caractérisé en ce que** le détergent non-ionique est un alcool ethoxylate gras, ethoxylate d'alkyl phényle, amine ethoxylate gras, ester ethoxylate d'acide gras ou un mélange de ceux-ci, en particulier un alcool ethoxylate gras d'alcools en C₁₆ à C₁₈ avec 16 à 20 unités d'ethoxy.

12. Procédé destiné à la fabrication d'un produit fibreux non inflammable selon la revendication 1, **caractérisé en ce qu'**une solution aqueuse de 1 à 15 % en poids de chlorure d'aluminium hydrate, qui comprend de 0,05 à 1 % en poids d'un détergent non-ionique, est appliquée sur une fibre cellulosique ou sur un mélange de fibres cellulosiques par l'intermédiaire d'un procédé de mélange, d'imprégnation, d'immersion ou de pulvérisation, après quoi intervient un processus de séchage, le produit fibreux comprenant, outre 30 à 97 % en poids de fibres, 0 à 68 % en poids d'un matériau de remplissage ou d'un mélange de matériaux de remplissage, par rapport au poids total.

13. Utilisation du produit fibreux selon l'une quelconque des revendications 1 à 11 comme matériau isolant soufflable et non inflammable ou ne provoquant pas de combustion lente.

14. Utilisation du produit fibreux selon l'une quelconque des revendications 1 à 11 pour la fabrication de corps de moulage ignifugés et isolants.
